# EUROPEAN PATENT APPLICATION

(11) **EP 4 787 944 A1**
(43) Date of publication of application: **05.08.2026**
(21) Application number: 24871989.0
(22) Date of filing: 18.09.2024
(51) Int. Cl.: H04W 24/10, H04B 7/0417, H04W 16/28, H04W 28/04, H04W 72/21

(54) **TERMINAL DEVICE FOR PERFORMING EFFICIENT BEAM CONTROL, BASE STATION DEVICE, CONTROL METHOD, AND PROGRAM**

(30) Priority: 28.09.2023 JP 2023167840
(71) Applicant: KDDI Corporation, Tokyo 163-8003 (JP)
(72) Inventor: OHSEKI, Takeo, Fujimino-shi, Saitama 356-8502 (JP); KAMIWATARI, Shunsuke, Fujimino-shi, Saitama 356-8502 (JP); KANNO, Issei, Fujimino-shi, Saitama 356-8502 (JP)
(74) Representative: Mathys & Squire
(86) International application number: PCT/JP2024/033232
(87) International publication number: WO 2025/070197

(57) **Abstract**

A terminal apparatus measures a predetermined signal transmitted by a base station apparatus, in order to select a beam to be used in communication with the terminal apparatus, and transmits at least part of a result of the measurement using a second radio resource, based on the second radio resource being available for transmitting different information from the measurement result to the base station apparatus, the second radio resource corresponding to a timing before a first radio resource to be used to report the measurement result, among radio resources corresponding to timings after a timing at which the measurement is performed.

## Description

### TECHNICAL FIELD

The present invention relates to a beam control technology in a cellular communication system.

### BACKGROUND ART

In a fifth-generation (5G) cellular communication system, a base station apparatus and a terminal apparatus are able to perform high-volume communication through beamforming. In 5G cellular communication standards, a predetermined signal such as an SSB (Synchronization Signal/Physical Broadcast Channel (SS/PBCH) Block) or a CSI-RS (Channel State Information-Reference Signal) transmitted by each of a plurality of beams formed by the base station apparatus is measured by the terminal apparatus, and a beam to be used in communication between the base station apparatus and the terminal apparatus is determined, based on the measurement results.

### SUMMARY OF INVENTION

### TECHNICAL PROBLEM

A Physical Uplink Control Channel (PUCCH) is used to transmit a report by the terminal apparatus on radio quality relating to a predetermined signal from the plurality of beams formed by the base station apparatus with a radio resource allocated to the terminal apparatus in advance by the base station apparatus for reporting the radio quality. When a long time elapses from measurement of the predetermined signal to reporting, a beam that was appropriate at the time of measurement may no longer be appropriate when selected. That is, shortening the time from measurement to reporting is important for high-precision beam control.

### SOLUTION TO PROBLEM

The present invention provides a technology for shortening the time between measurement of radio signals for beam selection and reporting of measurement results.

A terminal apparatus according to one aspect of the present invention comprises: measurement means for measuring a predetermined signal transmitted by a base station apparatus, in order to select a beam to be used in communication with the terminal apparatus; and transmission means for transmitting at least part of a result of the measurement using a second radio resource, based on the second radio resource being available for transmitting different information from the measurement result to the base station apparatus, the second radio resource corresponding to a timing before a first radio resource to be used to report the measurement result, among radio resources corresponding to timings after a timing at which the measurement is performed.

A base station apparatus according to one aspect of the present invention comprises: transmission means for transmitting a predetermined signal in order to select a beam to be used in communication with a terminal apparatus; reception means for receiving, from the terminal apparatus, at least part of a result of measurement of the predetermined signal by the terminal apparatus, using a second radio resource, based on the second radio resource being available for use by the terminal apparatus in transmitting different information from the measurement result, the second radio resource corresponding to a timing after a timing at which the predetermined signal is transmitted and before a first radio resource to be used by the terminal apparatus for reporting the measurement result to the base station apparatus; and setting means for setting a beam to be used in communication with the terminal apparatus, based on the measurement result.

### ADVANTAGEOUS EFFECTS OF INVENTION

According to the present invention, the time between measurement of radio signals for beam selection and reporting of measurement results can be shortened.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing an example configuration of a wireless communication system.
FIG. 2 is a diagram showing a conventional example of processing for setting a beam available for downlink signal transmission to a terminal apparatus.
FIG. 3 is a diagram showing an example of the processing flow of a first procedure.
FIG. 4A is a diagram illustrating a method of multiplexing measurement results.
FIG. 4B is a diagram illustrating a method of multiplexing measurement results.
FIG. 4C is a diagram illustrating a method of multiplexing measurement results.
FIG. 5 is a diagram showing a variation of the first procedure.
FIG. 6 is a diagram showing an example of the processing flow of a second procedure.
FIG. 7 is a diagram showing a variation of the second procedure.
FIG. 8 is a diagram showing an example hardware configuration of apparatuses.
FIG. 9 is a diagram showing an example functional configuration of a base station apparatus.
FIG. 10 is a diagram showing an example functional configuration of the terminal apparatus.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

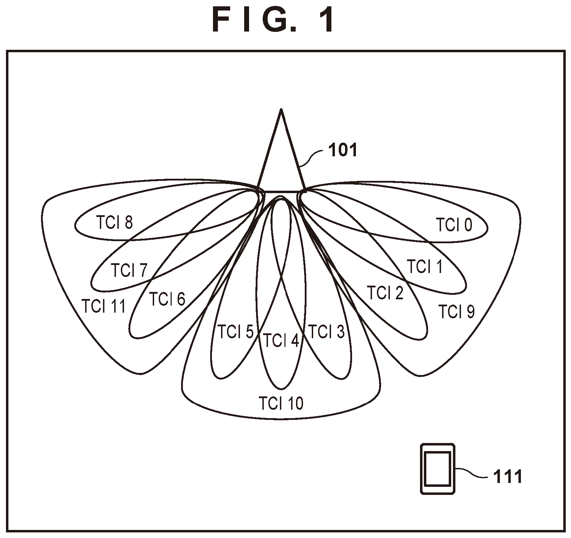

FIG. 1 shows an example configuration of a wireless communication system according to the present embodiment. The wireless communication system is a cellular communication system compliant with fifth generation (5G) cellular communication standards of the 3rd Generation Partnership Project (3GPP (Registered Trademark)) and is constituted including a base station apparatus 101 and a terminal apparatus 111. Note that, in FIG. 1, only one base station apparatus and one terminal apparatus are shown, but a large number of base station apparatuses and a large number of terminal apparatuses can naturally be provided.

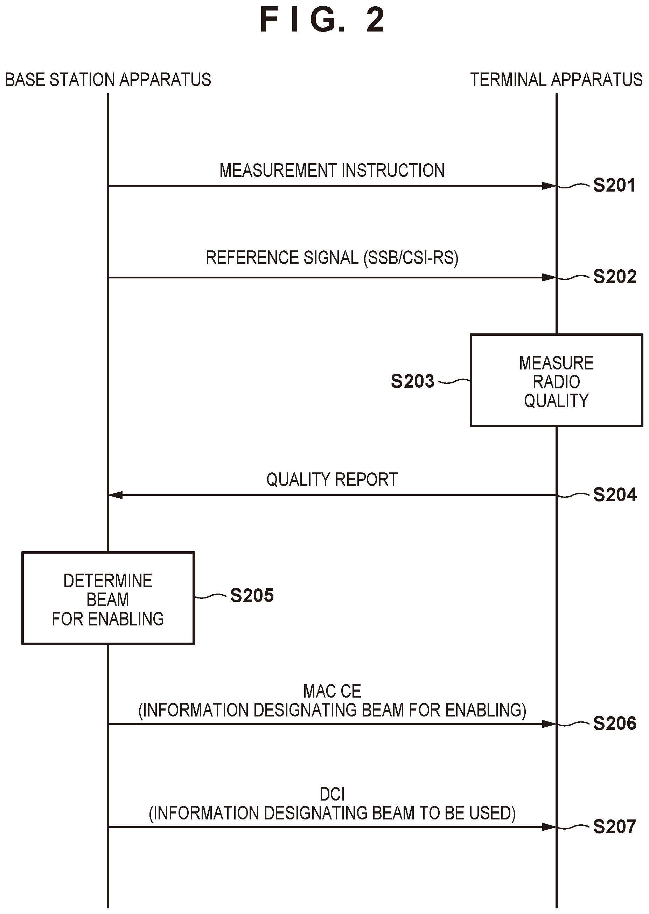

The base station apparatus 101 is able to form a plurality of beams and use some of those beams to provide communication services to the terminal apparatus 111. The base station apparatus 101 selects one of these beams and uses the selected beam to transmit a downlink signal to the terminal apparatus 111. Note that, when different beams are used, factors such as the characteristics of the transmission path between the terminal apparatus 111 and the base station apparatus 101 differ, and processing for decoding the downlink signal that is executed in the terminal apparatus 111 will also differ. Thus, when transmitting a downlink signal, the base station apparatus 101 uses Downlink Control Information (DCI) to notify the terminal apparatus 111 which beam was used to transmit the signal. Here, the base station apparatus 101 is capable of setting a large number of beams and is thus not able to uniquely specify the beam that is used in transmission of the downlink signal with the limited number of bits of the DCI in a situation where all of the beams can be used. Beams that can be used in transmission of the downlink signal to the terminal apparatus 111 can thus be selected from among the large number of beams available to the base station apparatus 101 and set in the terminal apparatus 111 in advance. The flow of this processing will now be described using FIG. 2.

Note that it is assumed that the base station apparatus 101 notifies setting information, transmitted with each beam by the base station apparatus 101, to the terminal apparatus 111 in advance, the setting information being for measurement and reporting, by the terminal apparatus 111, of the radio quality (Channel State Information (CSI)) of the predetermined signal for selection of a beam to be used between the base station apparatus 101 and the terminal apparatus 111. This notification of setting information is performed using a Radio Resource Control (RRC) message such as an RRC Reconfiguration message, for example. Thereafter, the base station apparatus 101 can, for example, instruct the terminal apparatus 111 to measure radio quality (step S201). This measurement instruction is transmitted to the terminal apparatus 111, using a Media Access Control Control Element (MAC CE) or DCI, for example. Note that measurement and reporting may be instructed together with the setting information. That is, in response to receiving setting information from the base station apparatus 101, the terminal apparatus 111 may execute measurement and reporting that is based on the setting information, without receiving any other instructions. The terminal apparatus 111 measures the radio quality of reference signals such as at least one of an SSB (Synchronization Signal/Physical Broadcast Channel (SS/PBCH) Block) and a CSI-RS (Channel State Information-Reference Signal) transmitted from the base station apparatus 101 (steps S202, S203). Then, after executing measurement, the terminal apparatus 111 transmits the measurement results to the base station apparatus 101 with a Physical Uplink Control Channel (PUCCH) set in advance (step S204).

The base station apparatus 101 uses the results of the reporting received in step S204 to determine one or more beams for enabling (for making available) for downlink signal transmission to the terminal apparatus 111, from among the beams available for downlink signal transmission by the base station apparatus 101 (step S205). Note that each of the beams that the base station apparatus 101 can form is associated with a Transmission Configuration Indication (TCI). Beams available for downlink signal transmission to the terminal apparatus 111 are set, by a TCI state indicating the state of the TCI being enabled. For example, the TCI state of beams heading in a direction that differs significantly from the direction of the terminal apparatus 111 is disabled, and the TCI state of at least one of beams heading in the direction of the terminal apparatus 111 is enabled. Note that the TCIs can each be associated with a reference signal targeted for measurement. For example, in the example in FIG. 1, TCI0 to TCI8 can be associated with a CSI-RS, and TCI9 to TCI11 can be associated with an SSB. Note that TCIn means TCI stateid = n. Different reference signals are associated with TCIs having mutually different TCI stateids. That is, CSI-RSs that are based on different radio resources (frequency and time resources) or series can be associated with TCI0 to TCI8, and SSBs based on different radio resources or series can be associated with TCI9 to TCI11. The base station apparatus 101 notifies setting information of these reference signals to the terminal apparatus 111, and the terminal apparatus 111 is able to measure these reference signals, based on the setting information. Also, in the case where the base station apparatus 101 and the terminal apparatus 111 communicate using a plurality of cells, the TCIs used by the respective cells may be associated, not with the reference signals provided by those cells, but with the reference signals provided by other cells. In that case, information for specifying which reference signals provided by cells are associated with which TCIs of cells can be notified to the terminal apparatus 111.

The base station apparatus 101 then transmits, to the terminal apparatus 111, a MAC CE that includes information designating the one or more beams determined for enabling for downlink signal transmission to the terminal apparatus 111 (step S206). Note that the base station apparatus 101 can notify the TCI stateids designating the one or more beams for enabling to the terminal apparatus 111. The base station apparatus 101 may notify, to the terminal apparatus 111, information such as a bitmap indicating whether the TCI state corresponding to each of the beams that are formed by the base station apparatus 101 is enabled or disabled. Thereafter, when transmitting a downlink signal (e.g., Physical Downlink Shared Channel (PDSCH) or Physical Downlink Control Channel (PDCCH)) to the terminal apparatus 111, the base station apparatus 101 selects a beam to be used from among the one or more beams determined for enabling in step S205. The base station apparatus 101 then transmits the DCI within the PDCCH that is transmitted at the time of transmitting the downlink signal to the terminal apparatus 111, with information designating the beam to be used included therein (step S207).

In this way, in order to set the beam of the downlink, the terminal apparatus 111 needs to perform CSI reporting after receiving a CSI measurement reporting instruction from the base station apparatus 101, and receive designation of the one or more beams determined for enabling based on the results of the reporting. In this way, setting an appropriate beam between the base station apparatus 101 and the terminal apparatus 111 requires a certain amount of time. When a long time elapses from when measurement is performed to when communication is actually performed, the radio environment may differ greatly between the times of measurement and communication. In this case, communication efficiency can deteriorate due to selection of the beam to be used not being appropriately performed.

In view of such circumstances, the present embodiment provides a technique for shortening the time from measurement to beam selection and usage. More specifically, the present embodiment provides a procedure for shortening the time from measurement in step S202 to reporting in step S204, for example.

### Processing Flow

In a first procedure, if the opportunity arises to transmit an uplink signal at an earlier timing than a timing set in advance, the terminal apparatus 111, on that occasion, transmits at least part of the results of measuring the reference signals transmitted by the base station apparatus 101. For example, the terminal apparatus 111 determines, at a second timing before a first timing corresponding to a first radio resource (set in advance) to be used for performing measurement reporting after the measurement timing of the reference signals, whether a second radio resource for uplink signal transmission is available. Then, on condition that the second radio resource is available, the terminal apparatus 111 transmits at least part of the measurement results with the second radio resource. For example, the terminal apparatus 111 can transmit all of the measurement results, using the second radio resource. The time difference between the timing at which measurement of the reference signals is performed and the timing at which reporting is performed in the terminal apparatus 111 can thereby be shortened, and it becomes possible to perform communication using an appropriate beam between the base station apparatus 101 and the terminal apparatus 111. Note that the terminal apparatus 111 need not transmit anything with the first radio resource. Also, the terminal apparatus 111 may, for example, transmit a small amount of information, such as information indicating whether radio quality has improved or deteriorated (for at least some of the beams) to the base station apparatus 101 with the second radio resource, and transmit the remaining information (e.g., information indicating the value of radio quality) to the base station apparatus 101 with another subsequent radio resource. Here, the other radio resource subsequent to the second radio resource may be the first radio resource set in advance for measurement reporting or may be another radio resource. For example, if a third radio resource corresponding to a timing after the second radio resource and before the first radio resource is available for uplink communication, the terminal apparatus 111 can use the second radio resource to transmit part of the measurement results to the base station apparatus 101, and use the third radio resource to transmit the remaining information to the base station apparatus 101. Note that, if the difference between the first timing and the second timing is less than a predetermined value (if there is no significant difference), for example, the terminal apparatus 111 may report the measurement results at the first timing, which is the original timing for reporting, and not report the measurement results at the second timing.

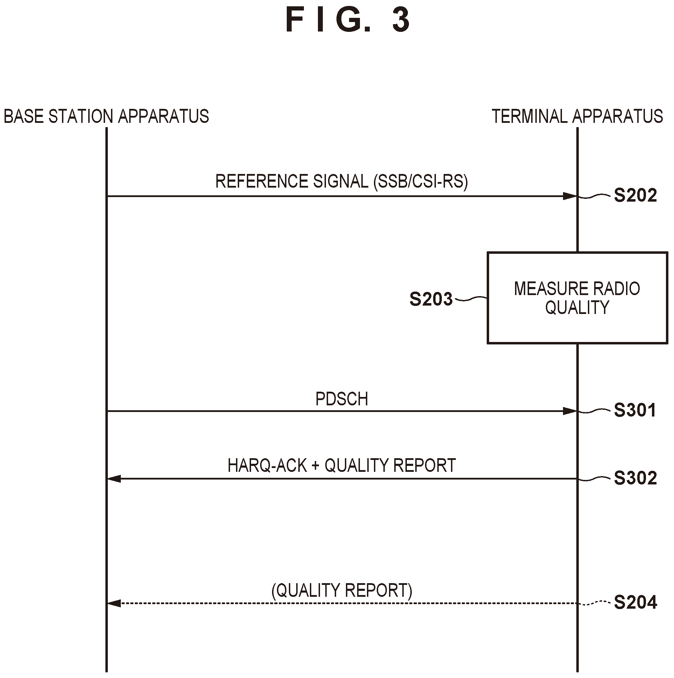

The first radio resource set in advance is, for example, a PUCCH that is set in advance for measurement reporting. On the other hand, the second radio resource is a Physical Uplink Shared Channel (PUSCH) or a PUCCH that is not set in advance for measurement reporting. As an example, the terminal apparatus 111 is able to use, as the second radio resource, a radio resource for transmission of a Hybrid Automatic Repeat Request-Acknowledgement (HARQ-ACK) that is transmitted to the base station apparatus 101 after receiving a PDSCH from the base station apparatus 101. An example of the flow of this processing is shown in FIG. 3. In the present processing example, it is assumed that after measuring reference signals such as SSBs, CSI-RSs, and the like transmitted from the base station apparatus 101 (steps S202, S203), the terminal apparatus 111 receives a PDSCH in response to which a HARQ-ACK is transmitted, before the radio resource (step S204) set in advance for transmission of the measurement results to the base station apparatus 101 (step S301). The terminal apparatus 111 transmits the HARQ-ACK in response to receiving this PDSCH, and, at that time, transmits at least part of the measurement results together therewith (step S302). Note that the terminal apparatus 111 transmits the measurement results with the radio resource available for transmitting the HARQ-ACK but can transmit the measurement results with a resource having a different frequency or time from the radio resource with which the HARQ-ACK is actually transmitted. Also, the terminal apparatus 111 is able to transmit at least part of the measurement results through multiplexing with a HARQ-ACK targeted for transmission, by modulating the HARQ-ACK, using information indicating the measurement results.

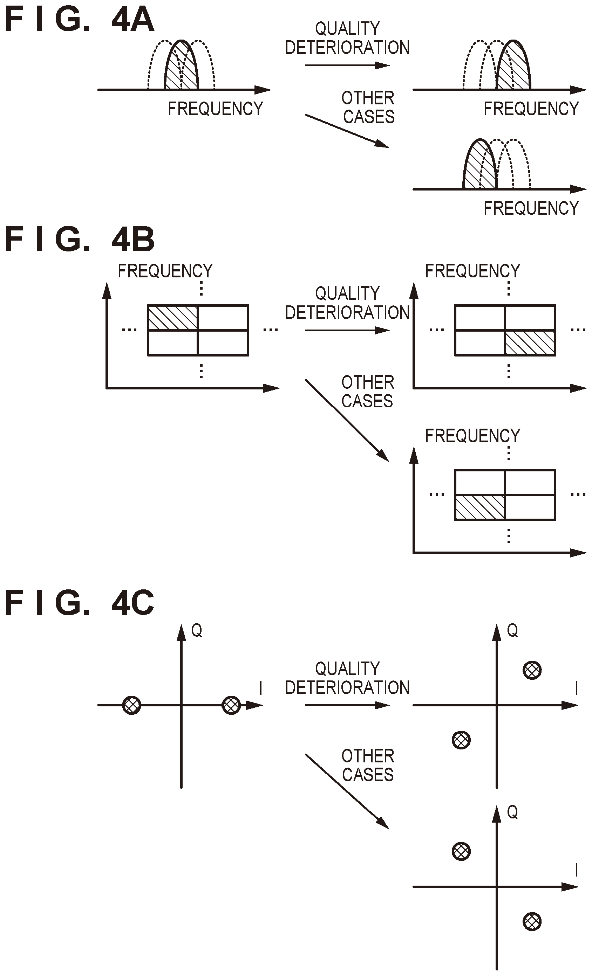

FIGS. 4A to 4C show examples of modulation of a HARQ-ACK. The terminal apparatus 111 changes the subcarrier with which the HARQ-ACK is transmitted, using information indicating the measurement results, as shown in FIG. 4A, for example. That is, the terminal apparatus 111 can transmit information showing the measurement results, by frequency modulating the HARQ-ACK. The base station apparatus 101 can demultiplex information indicating the measurement results and information of the HARQ-ACK to acquire the respective information, by specifying the subcarrier with which the information of the HARQ-ACK was transmitted. Note that FIG. 4A shows an example in which, in the case where the radio quality of the measurement result is lower than the previous reported value, a different subcarrier is used from other cases, but more detailed information of the measurement result may be multiplexed. In that case, the number of available subcarriers is increased, and the terminal apparatus 111 selects one or more subcarriers to be used in HARQ-ACK transmission among the group of subcarriers and performs transmission with the selected subcarriers. Here, due to patterns of subcarrier selection being associated with information to be transmitted, the terminal apparatus 111 transmits the HARQ-ACK using subcarriers corresponding to the information targeted for transmission. The base station apparatus 101 is then able to acquire information of the measurement result, according to the pattern of the subcarriers used to transmit the HARQ-ACK. In one example, the terminal apparatus 111 can transmit information of the measurement result through time variation with a specific pattern by the subcarriers with which the HARQ-ACK is transmitted.

Also, the terminal apparatus 111 may transmit information of the measurement result multiplexed with the HARQ-ACK, by changing the frequency and time resources for transmitting the HARQ-ACK, as shown in FIG. 4B. That is, the terminal apparatus 111 can transmit information of the measurement result multiplexed with the HARQ-ACK through index modulation. In this case also, a plurality of patterns of frequency and time resources available for transmitting the HARQ-ACK are prepared, and information of the measurement result is notified from the terminal apparatus 111 to the base station apparatus 101, depending on which pattern is used. Also, for example, information of the measurement result may be multiplexed with the HARQ-ACK, through changing the phase (phase modulation) of a constellation of the HARQ-ACK on an IQ (in-phase/quadrature) plane, as shown in FIG. 4C, for example. In the example of FIG. 4C, in the case where the HARQ-ACK is represented by +1 or -1 and information indicating a deterioration in quality is multiplexed, the phase of the HARQ-ACK is changed by 45 degrees in the IQ plane, and, in the case where the remaining information is multiplexed, the phase of the HARQ-ACK is changed by -45 degrees in the IQ plane. Note that not only the phase value but also the amplitude value may be changed.

Also, a configuration may be adopted in which the values transmitted by the HARQ-ACK are spread by code having a predetermined number of bits, and the spreading code that is used in the spreading corresponds to information of the measurement result. That is, the terminal apparatus 111 specifies a code corresponding to information of the measurement result from among the available codes, and uses the code to spread (code modulate) the information of the HARQ-ACK. The terminal apparatus 111 can then transmit the code that has been spread, using a radio resource capable of transmitting the HARQ-ACK. In this way, the terminal apparatus 111 is able to transmit information of measurement results multiplexed with a HARQ-ACK using various methods. Note that a radio resource available for transmitting the HARQ-ACK is an example of a radio resource available for transmitting information of measurement results, and the information of measurement results may be (e.g., multiplexed and) transmitted with another radio resource available for transmitting other uplink signals.

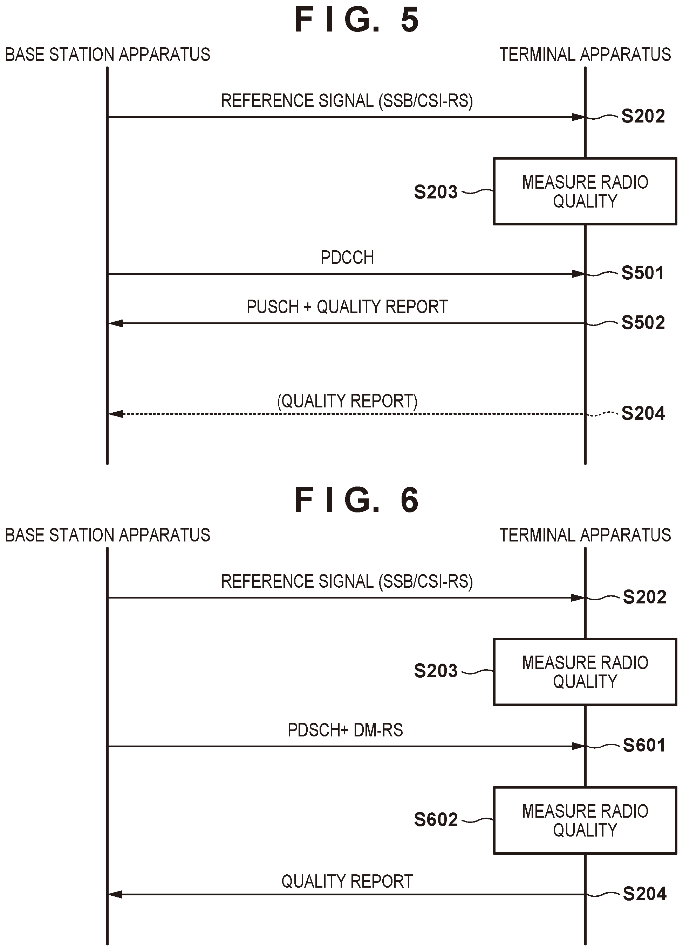

Note that a configuration may be adopted in which the terminal apparatus 111, in the case of being allocated a radio resource for transmitting user data, for example, uses that radio resource to transmit measurement results. That is, in the case of being allocated a radio resource for transmission of a PUSCH to the base station apparatus 101 at an earlier timing than the radio resource set in advance for reporting measurement results, the terminal apparatus 111 reports the measurement results, using the radio resource for PUSCH transmission. FIG. 5 shows an example of the processing flow in that case. The base station apparatus 101 allocates a radio resource for PUSCH transmission to the terminal apparatus 111, at an earlier timing than the radio resource (step S204) set in advance for reporting measurement results. The base station apparatus 101 transmits a PDCCH for allocation thereof (S501). The terminal apparatus 111 then transmits a measurement report to the base station apparatus 101 along with user data with the radio resource for PUSCH transmission (S502). Note that the terminal apparatus 111 may transmit measurement reports using a MAC CE or may transmit measurement reports as user data.

Note that, in the case where, for example, a radio resource for PUCCH (e.g., for HARQ-ACK) transmission and a radio resource for PUSCH transmission both exist at an earlier timing than the radio resource set in advance for measurement reporting, the terminal apparatus 111 may determine which of these radio resources to use by the data amount of the measurement report. That is, the terminal apparatus 111 can determine to use the radio resource for PUCCH transmission, in the case of transmitting a measurement report with a small data amount, such as a report that radio quality has deteriorated, for example, and can determine to use the radio resource for PUSCH transmission, in the case of transmitting a measurement report with a relatively large data amount, such as a report that contains values indicating the radio quality (e.g., Reference Signal Received Power (RSRP) or Reference Signal Received Quality (RSRQ)). Also, the terminal apparatus 111 can transmit some of the information using the radio resource for PUCCH transmission, and transmit the remaining information using the radio resource for PUSCH transmission. Also, a configuration may be adopted in which the terminal apparatus 111 transmits some of the information using the radio resource for PUCCH or PUSCH transmission at an earlier timing than the radio resource set in advance, and transmits the remaining information using the radio resource set in advance.

The base station apparatus 101 is thereby able to receive at least some of the information of the measurement results at an earlier timing than the radio resource set in advance and use that information to set a beam to be used in communication with the terminal apparatus 111. For example, when a report that radio quality has deteriorated is received with respect to a specific beam, the base station apparatus 101 is able to prevent that beam from being used in communication with the terminal apparatus 111 for at least a certain period (e.g., until detailed information is received). Also, when detailed information of the measurement result is received in relation to a specific beam, the base station apparatus 101 is able to control beam selection and the like in a conventional manner.

In the second procedure, in the case where the base station apparatus 101 transmits a downlink signal (PDSCH) to the terminal apparatus 111 after transmission of the reference signals for beam selection and before the timing corresponding to the radio resource set in advance for reporting the results of measuring the reference signals, the terminal apparatus 111 performs measurement based on the downlink signal and notifies the result of the measurement to the base station apparatus 101. An example of the flow of this processing is shown in FIG. 6. The base station apparatus 101 transmits SSBs and/or CSI-RSs (step S202), and the terminal apparatus 111 measures the radio quality of those reference signals (step S203). It is assumed that, thereafter, the base station apparatus 101 transmits a downlink signal (PDSCH) that includes user data to the terminal apparatus 111, before the timing of the radio resource (step S204) set in advance for measuring the radio quality of the reference signals (step S601). The terminal apparatus 111 measures the radio quality using a Demodulation Reference Signal (DM-RS) transmitted along with the PDSCH, for example (step S602). Note that the terminal apparatus 111 executes measurement with regard to the downlink signal transmitted using the beam instructed by the base station apparatus 101 to be used for measurement reporting of reference signals. That is, the beam used at the time of measurement in step S203 and the beam used at the time of measurement in step S602 are the same beam. The terminal apparatus 111 then transmits the radio quality measured in step S602, instead of the radio quality measured in step S203, to the base station apparatus 101, using the radio resource set in advance for reporting the measurement performed in step S203 (step S204). Even if the timing of the measurement reporting remains unchanged from the conventional timing, it is thereby possible to notify the results of measurement performed at a timing closer to the timing of the reporting to the base station apparatus 101. In this case, the base station apparatus 101 uses the received measurement results to perform control such as beam selection in a conventional manner.

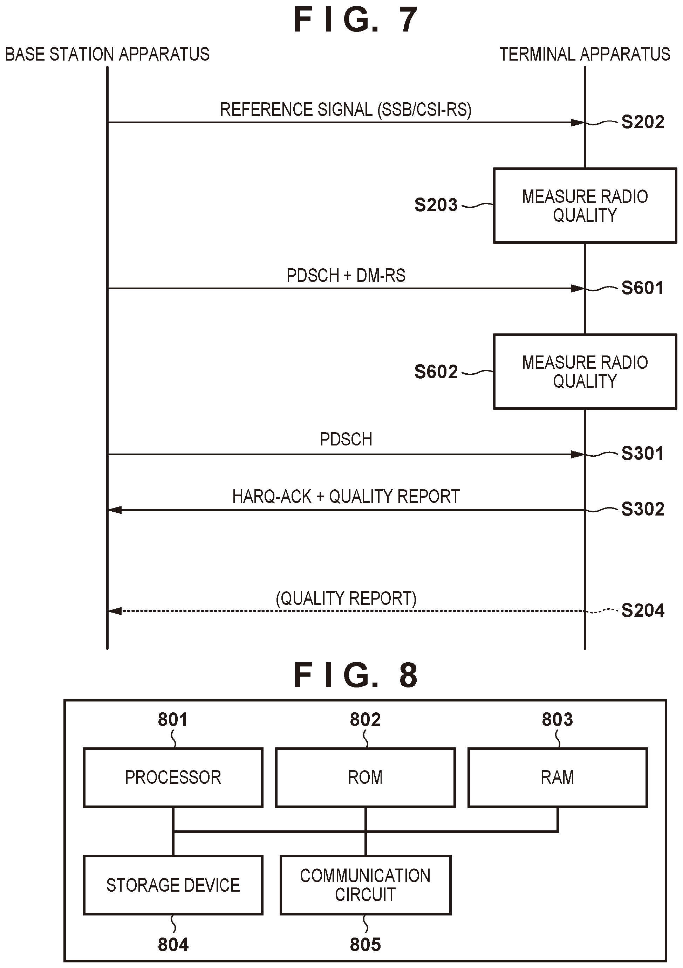

Also, the first procedure and the second procedure may be used in combination. FIG. 7 shows an example of the processing flow in that case. After receiving the measurement settings and measurement instruction, the terminal apparatus 111 performs first measurement (steps S202, S203) with regard to the reference signals targeted for measurement (SSBs and/or CSI-RSs) and second measurement (steps S601, S602) with regard to other downlink signals (e.g., DM-RS attached to PDSCH), and, if the opportunity arises to transmit an uplink signal at an earlier timing than the radio resource set in advance for reporting the first measurement, the terminal apparatus 111, on that occasion, transmits at least part of the measurement result of the second measurement to the base station apparatus 101 (steps S301, S302). The base station apparatus 101 is thereby able to quickly and appropriately set a beam to be used in communication with the terminal apparatus 111. Note that FIG. 7 shows an example in which the measurement results are multiplexed with a HARQ-ACK, but various modifications of the first procedure can naturally be applied, such as using a MAC CE as shown in FIG. 5.

### Apparatus Configuration

FIG. 8 shows an example hardware configuration of the base station apparatus 101 and the terminal apparatus 111 according to the present embodiment. The base station apparatus 101 and the terminal apparatus 111 are, in one example, constituted including a processor 801, a ROM 802, a RAM 803, a storage device 804, and a communication circuit 805. The processor 801 is a computer constituted including one or more processing circuits, such as a general-purpose CPU (Central Processing Unit) and an ASIC (Application-Specific Integrated Circuit), and executes overall processing of the apparatus and the various processing described above, by reading out and executing a program stored in the ROM 802 or the storage device 804. The ROM 802 is a read-only memory that stores information such as programs and various parameters related to processing that is executed by the base station apparatus 101 and the terminal apparatus 111. The RAM 803 is a random access memory that functions as a workspace for when the processor 801 executes programs, and stores temporary information. The storage device 804 is constituted by a removable external storage device, for example. The communication circuit 805 is constituted by a 5G or next generation-compatible circuit for wireless communication, for example. Note that, in FIG. 8, one communication circuit 805 is illustrated, but the base station apparatus 101 and the terminal apparatus 111 can have a plurality of communication circuits. For example, the base station apparatus 101 and the terminal apparatus 111 can have separate wireless communication circuits for 5G and for next-generation standards, and a common antenna for those circuits. Note that the base station apparatus 101 and the terminal apparatus 111 may have separate antennas suitable for the respective standards. Also, the base station apparatus 101 can, further, have a wired communication circuit that is used when communicating with other base station apparatuses and nodes of a core network. Also, the terminal apparatus 111 may, further, have communication circuits compliant with wireless communication standards other than cellular communication standards, such as wireless Local Area Network (LAN) and Bluetooth (registered trademark). Note that the base station apparatus 101 and the terminal apparatus 111 may have a separate communication circuit 805 for each of a plurality of available frequency bands, or may have a common communication circuit 805 for at least some of those frequency bands.

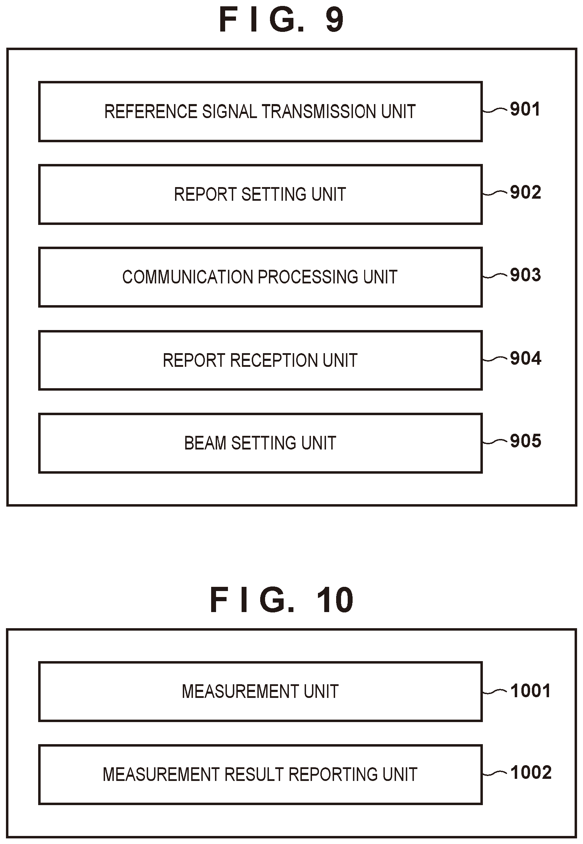

FIG. 9 is a diagram showing an example functional configuration of the base station apparatus 101 according to the present embodiment. The base station apparatus 101 is constituted including a reference signal transmission unit 901, a report setting unit 902, a communication processing unit 903, a report reception unit 904, and a beam setting unit 905, as functions thereof. Note that FIG. 9 shows only functions specifically related to the present embodiment, and illustration of various other functions that the base station apparatus 101 can have is omitted. For example, the base station apparatus 101 naturally has other functions that base station apparatuses compliant with 5G, next-generation standards, and the like generally have. Also, the functional blocks in FIG. 9 are schematically shown, and the respective functional blocks may be realized by being integrated or may be further subdivided. Also, the functions in FIG. 9 may be realized by, for example, the processor 801 executing a program stored in the ROM 802 or the storage device 804, or may be realized by, for example, a processor provided in the communication circuit 805 executing predetermined software. Note that since the processing executed by the functional units is as described in detail above, description thereof will not be repeated here, and only the broad functions will be outlined.

The reference signal transmission unit 901 transmits reference signals, such as SSBs, CSI-RSs, and the like, that are used in selection of a beam to be used in communication with the terminal apparatus 111. Also, when transmitting a PDSCH, the reference signal transmission unit 901 transmits a DM-RS for demodulating the PDSCH. The report setting unit 902 sets a radio resource for the terminal apparatus 111 to report the result of measurement of the SSB, CSI-RS, and the like transmitted by each of the beams formed by the base station apparatus 101. The report setting unit 902 notifies the settings of the radio resource to the terminal apparatus 111. The communication processing unit 903 executes processing for communicating with the terminal apparatus 111. For example, the communication processing unit 903 executes processing for transmitting a downlink signal (PDSCH) to the terminal apparatus 111 and receiving a HARQ-ACK in response to the PDSCH. Note that the communication processing unit 903 performs communication processing so as to also transmit a control signal such as a DM-RS along with the PDSCH, for example. Also, the communication processing unit 903 allocates, to the terminal apparatus 111, a radio resource for use in transmission of an uplink signal (PUSCH), and executes communication processing for receiving a radio signal from the terminal apparatus 111 via that radio resource. The report reception unit 904 receives information of the measurement results from the terminal apparatus 111. The report reception unit 904 receives the measurement results with the radio resource set in advance for reporting the results of measuring the SSBs and/or CSI-RSs, for example. Also, in the case where the terminal apparatus 111 is capable of utilizing an uplink radio resource corresponding to a timing before the radio resource set in advance, the report reception unit 904 can monitor that radio resource and determine whether a measurement result report from the terminal apparatus 111 has been received. For example, in the case where a PDSCH has been transmitted to the terminal apparatus 111 and transmission of a HARQ-ACK in response to the PDSCH at a timing before the radio resource set in advance is specified, the report reception unit 904 can monitor whether the measurement report is multiplexed with the HARQ-ACK that is received. If the measurement report is multiplexed with the HARQ-ACK, the report reception unit 904 separates the measurement report from the information of the HARQ-ACK to acquire the measurement report, by performing demultiplexing processing. Also, if it is specified that a radio resource for transmitting a PUSCH has been allocated to the terminal apparatus 111 at a timing before the radio resource set in advance, the report reception unit 904 can determine whether the measurement report was received with that radio resource. If a MAC CE for measurement reporting is received with the radio resource for PUSCH transmission, for example, the report reception unit 904 is able to receive the measurement report by decoding the MAC CE. The beam setting unit 905 executes setting processing such as selecting a beam available for communication with the terminal apparatus 111, based on the results of measuring radio quality in the terminal apparatus 111 received by the report reception unit 904.

FIG. 10 is a diagram showing an example functional configuration of the terminal apparatus 111 according to the present embodiment. The terminal apparatus 111 is constituted including a measurement unit 1001 and a measurement result reporting unit 1002, for example, as functions thereof. Note that FIG. 10 shows only functions specifically related to the present embodiment, and illustration of various other functions that the terminal apparatus 111 can have is omitted. For example, the terminal apparatus 111 naturally has other functions that terminal apparatuses compliant with 5G, next-generation standards, and the like generally have. Also, the functional blocks in FIG. 10 are schematically shown, and the respective functional blocks may be realized by being integrated or may be further subdivided. Also, the functions in FIG. 10 may be realized by, for example, the processor 801 executing a program stored in the ROM 802 or the storage device 804, or may be realized by, for example, a processor provided in the communication circuit 805 executing predetermined software. Note that since the processing that is executed by the functional units is as described in detail above, description thereof will not be repeated here, and only the broad functions will be outlined.

The measurement unit 1001 executes measurement of radio quality that is based on the reference signals transmitted from the base station apparatus 101. The measurement unit 1001 measures the reception quality (e.g., RSRP or RSRQ) of the SSBs and/or CSI-RSs transmitted by at least some of the beams formed by the base station apparatus 101, in response to receiving the measurement instruction, for example. Also, in one embodiment, if a downlink signal is received with a beam with respect to which the reception quality of an SSB or a CSI-RS was measured, before the measurement result is reported, the measurement unit 1001 can measure the reception quality of that downlink signal. The measurement result reporting unit 1002 reports the radio quality measured by the measurement unit 1001 to the base station apparatus 101. The measurement result reporting unit 1002 can, for example, transmit a signal for reporting the measurement results with a radio resource for reporting set in advance by the base station apparatus 101. Also, if there is a second radio resource on which an uplink signal can be transmitted at a timing before the first radio resource set in advance for use in reporting, the measurement result reporting unit 1002 can transmit the measurement result report with that second radio resource. Note that since the method of reporting measurement results with the second radio resource is as described above, description thereof will not be repeated here. Also, the measurement result reporting unit 1002 can transmit part of the measurement results with the second radio resource, and transmit the remaining part with the first radio resource or a third radio resource that differs from the first radio resource and the second radio resource. In one example, the measurement result reporting unit 1002 reports some of the measurement results through multiplexing with the HARQ-ACK which is in response to reception of the PDSCH, at a timing before the radio resource set in advance. Also, the measurement result reporting unit 1002 can report the remaining part of the measurement results with the radio resource for PUSCH transmission similarly allocated at a timing before the radio resource set in advance. The measurement result reporting unit 1002 need not use the radio resource set in advance, if all of the measurement results can be reported at a timing before the radio resource set in advance, for example. Also, if, after executing the first measurement of radio quality with regard to SSBs and/or CSI-RSs, the measurement unit 1001 performs the second measurement of radio quality with regard to a DM-RS before the measurement report, for example, the measurement result reporting unit 1002 may report only the result of the second measurement and not report the results of the first measurement. Also, the measurement result reporting unit 1002 may report both the result of the second measurement and the results of the first measurement to the base station apparatus 101.

With a configuration such as described above, the time from when measurement of signals from the base station apparatus 101 is performed to when measurement results are reported can be shortened in the terminal apparatus 111. As a result, it can be ensured that the beam to be used in communication with the terminal apparatus 111 is more appropriately selected in the base station apparatus 101. Therefore, it becomes possible to contribute to Goal 9 of the United Nations-led Sustainable Development Goals (SDGs) which aims to "Build resilient infrastructure, promote inclusive and sustainable industrialization, and foster innovation".

The invention is not limited to the foregoing embodiments, and various variations/changes are possible within the spirit of the invention.

The present application claims the benefit of priority from Japanese Patent Application No. 2023-167840 filed on September 28, 2023, which is hereby incorporated by reference herein in its entirety.

## Claims

1. A terminal apparatus comprising:
measurement means for measuring a predetermined signal transmitted by a base station apparatus, in order to select a beam to be used in communication with the terminal apparatus; and
transmission means for transmitting at least part of a result of the measurement using a second radio resource, based on the second radio resource being available for transmitting different information from the measurement result to the base station apparatus, the second radio resource corresponding to a timing before a first radio resource to be used to report the measurement result, among radio resources corresponding to timings after a timing at which the measurement is performed.

2. The terminal apparatus according to claim 1,
wherein the transmission means multiplexes the at least part of the measurement result with a Hybrid Automatic Repeat Request-Acknowledgement (HARQ-ACK) for a Physical Downlink Shared Channel (PDSCH) received from the base station apparatus, and transmits the at least part of the measurement result multiplexed with the HARQ-ACK with the second radio resource which is available for transmitting the HARQ-ACK.

3. The terminal apparatus according to claim 2,
wherein the transmission means performs the multiplexing by modulating the HARQ-ACK, using the at least part of the measurement result.

4. The terminal apparatus according to claim 2,
wherein the transmission means transmits part of the measurement result with the second radio resource which is available for transmitting the HARQ-ACK, and transmits a remaining part of the measurement result with a radio resource corresponding to a timing after the second radio resource.

5. The terminal apparatus according to claim 1,
wherein the transmission means transmits the at least part of the measurement result with a Media Access Control Control Element (MAC CE), using the second radio resource which is allocated by the base station apparatus for transmission of a Physical Uplink Shared Channel (PUSCH) by the terminal apparatus.

6. A base station apparatus comprising:
transmission means for transmitting a predetermined signal in order to select a beam to be used in communication with a terminal apparatus;
reception means for receiving, from the terminal apparatus, at least part of a result of measurement of the predetermined signal by the terminal apparatus, using a second radio resource, based on the second radio resource being available for use by the terminal apparatus in transmitting different information from the measurement result, the second radio resource corresponding to a timing after a timing at which the predetermined signal is transmitted and before a first radio resource to be used by the terminal apparatus for reporting the measurement result to the base station apparatus; and
setting means for setting a beam to be used in communication with the terminal apparatus, based on the measurement result.

7. The base station apparatus according to claim 6,
wherein the at least part of the measurement result is multiplexed with a Hybrid Automatic Repeat Request-Acknowledgement (HARQ-ACK) for a Physical Downlink Shared Channel (PDSCH) transmitted by the base station apparatus, and transmitted with the second radio resource which is available for transmitting the HARQ-ACK, and
the reception means demultiplexes and acquires the at least part of the measurement result multiplexed with the HARQ-ACK.

8. The base station apparatus according to claim 7,
wherein the multiplexing is performed by modulating the HARQ-ACK, using the at least part of the measurement result, and
the reception means performs the demultiplexing by demodulating the HARQ-ACK.

9. The base station apparatus according to claim 7,
wherein the reception means receives part of the measurement result with the second radio resource which is available for use by the terminal apparatus in transmitting the HARQ-ACK, and receives a remaining part of the measurement result with a radio resource corresponding to a timing after the second radio resource.

10. The base station apparatus according to claim 6,
wherein the second radio resource is a radio resource allocated by the base station apparatus for transmission of a Physical Uplink Shared Channel (PUSCH) by the terminal apparatus, and
the reception means receives the at least part of the measurement result with a Media Access Control Control Element (MAC CE) transmitted by the terminal apparatus using the second radio resource.

11. A control method executed by a terminal apparatus, comprising:
measuring a predetermined signal transmitted by a base station apparatus, in order to select a beam to be used in communication with the terminal apparatus; and
transmitting at least part of a result of the measurement using a second radio resource, based on the second radio resource being available for transmitting different information from the measurement result to the base station apparatus, the second radio resource corresponding to a timing before a first radio resource to be used to report the measurement result, among radio resources corresponding to timings after a timing at which the measurement is performed.

12. A control method executed by a base station apparatus, comprising:
transmitting a predetermined signal in order to select a beam to be used in communication with a terminal apparatus;
receiving, from the terminal apparatus, at least part of a result of measurement of the predetermined signal by the terminal apparatus, using a second radio resource, based on the second radio resource being available for use by the terminal apparatus in transmitting different information from the measurement result, the second radio resource corresponding to a timing after a timing at which the predetermined signal is transmitted and before a first radio resource to be used by the terminal apparatus for reporting the measurement result to the base station apparatus; and
setting a beam to be used in communication with the terminal apparatus, based on the measurement result.

13. A program for causing a computer included in a terminal apparatus to execute the control method according to claim 11.

14. A program for causing a computer included in a base station apparatus to execute the control method according to claim 12.
